# EUROPÄISCHE PATENTSCHRIFT

(11) **EP 3 752 795 B1**
(45) Veröffentlichungstag und Bekanntmachung des Hinweises auf die Patenterteilung: **19.06.2024**
(21) Anmeldenummer: 19705729.2
(22) Anmeldetag: 13.02.2019
(51) Int. Cl.: G01D 5/00, G08C 19/02, H04J 3/06

(54) **VERFAHREN ZUM ÜBERTRAGEN VON SENSORINFORMATION**
METHOD FOR TRANSMITTING SENSOR INFORMATION
PROCÉDÉ DE TRANMISSION D'INFORMATION DE CAPTEUR

(30) Priorität: 15.02.2018 DE 102018202333
(43) Veröffentlichungstag der Anmeldung: 23.12.2020
(73) Patentinhaber: Continental Automotive Technologies GmbH, 30175 Hannover (DE)
(72) Erfinder: Eckrich, Jörg, 60488 Frankfurt am Main (DE); Brüggemann, stephan, 60488 Frankfurt am Main (DE); Voht, Wjatscheslaw, 60488 Frankfurt am Main (DE)
(74) Vertreter: Continental Corporation
(86) Internationale Anmeldenummer: PCT/EP2019/053478
(87) Internationale Veröffentlichungsnummer: WO 2019/158544

(56) Entgegenhaltungen:
- EP-A1- 2 182 697
- EP-A2- 2 549 295
- WO-A1-2012/082207
- DE-A1-102011 087 842
- DE-A1-102014 219 004
- DE-A1-102016 201 783
- US-A1- 2015 236 869
- US-A1- 2017 163 366
- Bosch Et Al: "Peripheral Sensor Interface - Base Standard Peripheral Sensor Interface for Automotive Applications Peripheral Sensor Interface - Base Standard Contents", , 1. Januar 2018 (2018-01-01), Seiten 1-72, XP055586229, Gefunden im Internet: URL:https://psi5.org/fileadmin/user_upload /01_psi5.org/04_Specification/Specificatio ns_PDFs/v2.3/PSI5_spec_v2.3_Base.pdf [gefunden am 2019-05-07] in der Anmeldung erwähnt
- Bosch Et Al.: "Peripheral Sensor Interface - Substandard Chassis and Safety Technical Specification Peripheral Sensor Interface for Automotive Applications Substandard Chassis and Safety PSI5 Technical Specification Substandard Chassis and Safety V2.3 01/2018 Peripheral Sensor Interface - Substandard Chassis and S", , 1. Januar 2018 (2018-01-01), Seiten 1-19, XP055586233, Gefunden im Internet: URL:https://psi5.org/fileadmin/user_upload /01_psi5.org/04_Specification/Specificatio ns_PDFs/v2.3/PSI5_spec_v2.3_Chassis_and_Sa fety.pdf [gefunden am 2019-05-07]

## Beschreibung

Die Erfindung betrifft ein Verfahren zum Übertragen von Sensorinformation zwischen einem Sensor und einer zum Verarbeiten der Sensorinformation ausgebildeten Steuervorrichtung in einem Fahrzeug sowie einen entsprechenden Sensor.

Im Stand der Technik sind Verfahren zum Übertragen von Information zwischen einem Sensor und einer Steuervorrichtung bekannt. Um bei der Übertragung eine gewisse Standardisierung zu erreichen wird dabei meist ein bestimmtes Datenübertragungsprotokoll, beispielsweise das bekannte PSI5-Datenprotokoll, verwendet.

Für manche Sensoranwendungen kann es wünschenswert sein, dass die an die Steuervorrichtung gelieferten Sensorinformationen, die sich aus der Messung des Sensors ergeben, mit einer hohen Aktualität vorliegen. Da die Sensorinformationen jedoch diskontinuierlich und gemäß des verwendeten Datenübertragungsprotokolls gesendet werden müssen, lässt sich die Aktualisierungsrate nicht ohne weiteres erhöhen. Ein weiteres Problem ist, dass das Alter der Sensorinformation bzw. der genaue Messzeitpunkt, an dem der Sensor die Messgröße abgetastet hat, normalerweise nicht bekannt ist. Für manche Systeme, speziell im Kraftfahrzeug, ist diese Information jedoch bedeutsam. Ein Beispiel hierfür bildet ein modernes Fahrwerkregelsystem, das komplexe Berechnungen durchführt und dabei die Sensorinformationen von Höhenstandssensoren auswerten muss.

Aus der US 2015/236868A1, der US 2017/163366 A1, der EP 2182697 und der EP 2549295 sind Verfahren zur Übertragung von Sensorinformationen gezeigt, bei denen die Steuervorrichtung ein Anforderungssignal beziehungsweise einen Synchronisierungsimpuls sendet. Der Sensor sendet nach Empfang des Anforderungssignals zu einem definierten Zeitpunkt ein Sensorsignal an die Steuervorrichtung zurück.

Es ist daher Aufgabe der Erfindung, ein Verfahren zum Übertragen von Information zwischen einem Sensor und einer Steuervorrichtung anzugeben, das eine ausreichende und / oder zuverlässige Aktualisierungsrate erlaubt und / oder einfach und kostengünstig realisierbar ist bzw. ein entsprechendes Erzeugnis anzugeben. Die Aufgabe wird durch die Merkmale der unabhängigen Ansprüche gelöst. Vorteilhafte Ausgestaltungen der Erfindung sind Gegenstand der abhängigen Ansprüche. Der Wortlaut der Ansprüche wird durch ausdrückliche Bezugnahme zum Inhalt der Beschreibung gemacht.

Gemäß einem Aspekt der Erfindung sendet bei einem Verfahren zum Übertragen von Sensorinformation zwischen einem Sensor und einer zum Verarbeiten der Sensorinformation ausgebildeten Steuervorrichtung in einem Fahrzeug die Steuervorrichtung eine Anforderung in Form eines Synchronisationspulses zum Übertragen von Sensorinformation an den Sensor aus, wobei der Sensor ausgelöst durch den Synchronisationspuls, zu einem relativ zum Synchronisationspuls zeitlich definierten Zeitpunkt, insbesondere im Wesentlichen zeitgleich oder unmittelbar auf den Synchronisationspuls folgend, einen Abtastwert einer Messgröße aufnimmt, wonach der Abtastwert in eine Sensorinformation gewandelt und der Steuervorrichtung in einem durch ein Datenübertragungsprotokoll definierten Zeitschlitz übertragen wird.

Das Datenübertragungsprotokoll definiert ein Format zum zeitlichen Ablauf beim Übertragen von Sensorinformationen, wobei sich ein Datenrahmen gemäß des Datenübertragungsprotokolls periodisch wiederholt und einen Synchronisationspuls der Steuervorrichtung sowie wenigstens zwei, vorzugsweise drei, nachfolgende Zeitschlitze umfasst.

Es wird eine Überprüfung vorgenommen, ob der Zeitraum, den der Sensor minimal oder im Mittel dafür benötigt, den Abtastwert in eine Sensorinformation zu wandeln, größer ist als der Zeitraum eines Datenrahmens ohne den letzten Zeitschlitz, und wenn dies der Fall ist, der Sensor den Abtastwert um diese zeitliche Differenz versetzt vor dem Synchronisationspuls aufnimmt.

Bei dem Datenübertragungsprotokoll handelt es sich vorzugsweise um ein digitales, insbesondere PSI5. Unter dem Begriff Zeitschlitz, auch Zeitfenster (engl. time slot) wird vorzugsweise ein Zeitabschnitt verstanden, der in Relation zu einem Element des Datenübertragungsprotokolls, bevorzugt einem Synchronisationspuls, einen im Datenübertragungsprotokoll definierten bestimmten zeitlichen Versatz aufweist und für eine ebenfalls im Datenübertragungsprotokoll definierte Zeitdauer anhält. Der Zeitschlitz ist dabei bevorzugt als Zeitraum angelegt, in dem genau ein Sensor Sensorinformationen über den Datenbus an die Steuervorrichtung senden kann.

Darunter, dass der Sensor ausgelöst durch den Synchronisationspuls, zu einem relativ zum Synchronisationspuls zeitlich definierten Zeitpunkt einen Abtastwert einer Messgröße aufnimmt, wird vorzugsweise verstanden, dass der Sensor den Abtastwert der Messgröße zeitlich abhängig bzw. abgestimmt auf den Synchronisationspuls aufnimmt, also nicht, wie in herkömmlichen Verfahren, zu einem vom Zeitpunkt des Synchronisationspulses unabhängigen Zeitpunkt. Nach einer bevorzugten Weiterbildung führt der Sensor die Schritte
- Erkennen oder Vorausberechnen des Synchronisationspulses und
- Aufnehmen eines Abtastwerts einer Messgröße zu einem bestimmten Abtastzeitpunkt, der vom Zeitpunkt des erkannten oder vorausberechneten Synchronisationspulses abhängig ist aus. Entsprechend kann der Sensor bevorzugt eine Abtaststeuerungseinrichtung aufweisen, die dazu ausgebildet ist, einen Synchronisationspuls zu erkennen und / oder vorauszuberechnen und das Abtasten der Messgröße abhängig davon auszulösen oder freizugeben.

Die Erfindung geht von der Überlegung aus, dass es vorteilhaft wäre, wenn ein vom Sensor abgetasteter Messwert immer in dem Datenrahmen als Sensorinformation an das Steuergerät gesendet werden könnte, der gerade aktuell ist, so dass nicht in bestimmten Fällen der nächste Datenrahmen abgewartet werden muss, beispielsweise weil die Berechnung der Sensorinformation aus dem Messwert noch nicht abgeschlossen ist. In dem der Synchronisationspuls der Steuervorrichtung dem Sensor als Referenz zur Verfügung gestellt wird, kann dieser die Abtastung eines Messwerts zeitlich so abstimmen, dass nach der Messung kein weiterer bzw. zusätzlicher Synchronisationspuls abgewartet werden muss. Durch die Abhängigkeit des Zeitpunkts an dem der Sensor den Abtastwert der Messgröße aufgenommen hat von dem Zeitpunkt des Synchronisationspulses, ist der genaue Zeitpunkt der Messung festgelegt und damit bekannt. Dieser Zeitpunkt muss der Steuervorrichtung nicht einmal zusammen mit der Sensorinformation mitgeteilt werden, da diese den Zeitpunkt des Synchronisationspulses und damit auch den Zeitpunkt der Messung bereits kennt. Mit anderen Worten ist das Datenalter der Messung bekannt, was bei komplexen Sensoranwendungen, wie beispielsweise einer Fahrwerksregelung, vorteilhaft ist.

Bevorzugt wird unter dem Begriff Datenrahmen verstanden, dass ein Datenpaket einer bestimmten zeitlichen Abfolge möglicher Datenübertragungen folgt. Es wird bevorzugt durch den Synchronisationspuls eingeleitet und stellt Zeitschlitze, besonders bevorzugt drei Zeitschlitze, bereit, in die Daten, bspw. Sensorinformationen gefüllt werden können. Dabei kann dem Datenpaket eines Datenrahmens ein definierter Speicherbereich zugeordnet sein, in welchen das Datenpaket geschrieben bzw. gespeichert wird.

Dadurch dass der Sensor den Abtastwert optional um eine zeitliche Differenz versetzt vor dem Synchronisationspuls aufnimmt, lässt sich das Verfahren auch anwenden, wenn die Berechnung der Sensorinformation durch den Sensor so viel Zeit in Anspruch nimmt, dass bei Abtastung gleichzeitig mit dem Synchronisationspuls keiner der innerhalb des aktuellen Datenrahmens auf den Synchronisationspuls folgenden Zeitschlitze befüllt werden kann. Aufgrund der zeitlich äquidistanten Abstände der Synchronisationspulse und der bekannten bzw. abgeschätzten Zeit zum Wandeln des Abtastwerts in eine Sensorinformation kann der Sensor den relativ zum nächsten Synchronisationspuls vorversetzten Zeitpunkt berechnen, zu dem die Abtastung des Messsignals vorgenommen werden muss, so dass der zugeordnete Zeitschlitz befüllt werden kann. Auch bei dieser Ausführungsform ist daher der genaue Mess- bzw. Abtastzeitpunkt bekannt.

Es ist bevorzugt, dass es sich um ein PSI5-Datenübertragungsprotokoll, besonders bevorzugt Version 2.3, handelt und / oder ein Datenrahmen eine Zeitspanne von wenigstens annähernd 500µs umfasst. Ein Synchronisationspuls ist bevorzugt ausgebildet als ansteigende, ggf. auf einem Wert verharrende, dann abfallende Spannung, wobei sich dies in einer Zeit von weniger als 100ps vollzieht.

Vorzugsweise wird die Sensorinformation der Steuervorrichtung in einem Zeitschlitz übertragen, der innerhalb des Datenrahmens liegt, der den von der Steuervorrichtung ausgesendeten Synchronisationspuls umfasst. Die Sensorinformation kann somit ohne größeren Verzug an die Steuervorrichtung gesendet werden.

Es ist bevorzugt, dass dem Sensor einer der Zeitschlitze so zugewiesen ist, dass der zugewiesene Zeitschlitz innerhalb des Datenrahmens unmittelbar auf den Zeitraum folgt, den der Sensor minimal oder im Mittel benötigt, um den Abtastwert in eine Sensorinformation zu wandeln. Bevorzugt wird die Sensorin-formation der Steuervorrichtung in dem zugewiesenen Zeitschlitz übertragen. Damit ist gewährleistet, dass angesichts der benötigten Rechenzeit des Sensors die im Rahmen des Datenübertragungsprotokolls nächstmögliche Gelegenheit zur Übertragung der Sensorinformation genutzt wird.

Nach einer bevorzugten Weiterbildung ist der zugewiesene Zeitschlitz der vorletzte oder einer der vorangehenden Zeitschlitze des Datenrahmens, wobei die Sensorinformation der Steuervorrichtung in dem zugewiesenen Zeitschlitz übertragen wird oder, falls sich der vom Sensor benötigte Zeitraum zum Wandeln des Abtastwerts in eine Sensorinformation mit dem zugewiesenen Zeitschlitz überschneidet, in einem der nachfolgenden Zeitschlitze übertragen wird. Damit dient der letzte Zeitschlitz als Absicherung und sorgt für eine besonders hohe Zuverlässigkeit des Verfahrens. Nach weiteren bevorzugten Ausführungsformen kann der zugewiesene Zeitschlitz der vorvorletzte oder ein noch früherer Zeitschlitz sein, so dass mehrere Zeitschlitze als Absicherung zur Verfügung stehen.

Es entspricht einer weiteren bevorzugten Ausführungsform, dass der Synchronisationspuls als Spannungsimpuls mit einer aufsteigenden und einer absteigenden Flanke ausgebildet ist, wobei der Sensor den Abtastwert der Messgröße während der aufsteigenden oder absteigenden Flanke aufnimmt.

Es ist bevorzugt, dass alle oder einzelne Verfahrensschritte zyklisch mehrfach wiederholt werden.

Gemäß einem weiteren Aspekt der Erfindung ist ein Sensor zum Übertragen von Sensorinformation an eine zum Verarbeiten der Sensorinformation ausgebildete Steuervorrichtung in einem Fahrzeug mittels dem zuvor beschriebenen Verfahren ausgebildet.

Es ist bevorzugt, dass der Sensor, besonders bevorzugt mit einer entsprechend ausgebildeten Abtaststeuerungseinrichtung dazu ausgebildet ist, die Schritte
- Erkennen oder Vorausberechnen des Synchronisationspulses und
- Aufnehmen eines Abtastwerts einer Messgröße zu einem bestimmten Abtastzeitpunkt, der vom Zeitpunkt des erkannten oder vorausberechneten Synchronisationspulses abhängig ist auszuführen.

Der Sensor ist bevorzugt als Höhenstandssensor zum Messen des Abstands zwischen einer Radaufhängung und der Karosserie eines Fahrzeugs ausgebildet, insbesondere zur Leuchtweiten- und / oder Fahrwerksregulierung.

Der Höhenstandssensor ist vorzugsweise zum Erfassen eines Drehwinkels basierend auf einer relativen Winkellage eines physikalischen Feldes, besonders bevorzugt Magnetfeld, ausgebildet und umfasst ein erstes und ein zweites Sensorelement, zwischen denen das physikalische Feld übertragbar ist, wobei das erste Sensorelement als Geberelement und das zweite Senso-relement als Nehmerelement ausgebildet ist oder umgekehrt, eine Welle an der das erste Sensorelement fixiert ist, ein Gehäuse an dem das zweite Sensorelement fixiert ist, wobei das Gehäuse einen Bereich zur Lagerung der Welle umfasst und wobei die Welle über einen Hebel bzw. ein Gestänge drehbar mit einem Rad bzw. dem Radträger verbindbar ist, wobei das Gehäuse an der Karosserie des Fahrzeugs fixiert ist.

Nach einer Weiterbildung ist der Sensor als Beschleunigungsssensor zum Messen der Beschleunigung einer Radaufhängung relativ zur Karosserie eines Fahrzeugs ausgebildet, insbesondere zur Fahrwerksregulierung.

Nach einer zusätzlichen Weiterbildung ist der Sensor dazu ausgebildet, sowohl die Höhe als auch die Beschleunigung zu messen. Dazu kann der Beschleunigungssensor auf einer Leiterplatte des Höhenstandssensors oder zumindest in dessen Gehäuse integriert sein.

Die oben beschriebenen Eigenschaften, Merkmale und Vorteile der Erfindung sowie die Art und Weise, wie diese erreicht werden, werden klarer und deutlicher verständlich im Zusammenhang mit den nachfolgend erläuterten Zeichnungen. Dabei zeigen in stark schematischer Darstellung die
- Fig. 1: einen zeitlichen Ablauf in einem Ausschnitt gemäß einem Datenübertragungsprotokoll sowie den Ablauf der Gewinnung und Ausgabe von Sensorinformation nach dem Stand der Technik,
- Fig. 2: einen erfindungsgemäßen zeitlichen Ablauf in einem Ausschnitt gemäß einem Datenübertragungsprotokoll sowie den Ablauf der Gewinnung und Ausgabe von Sensorinformation.

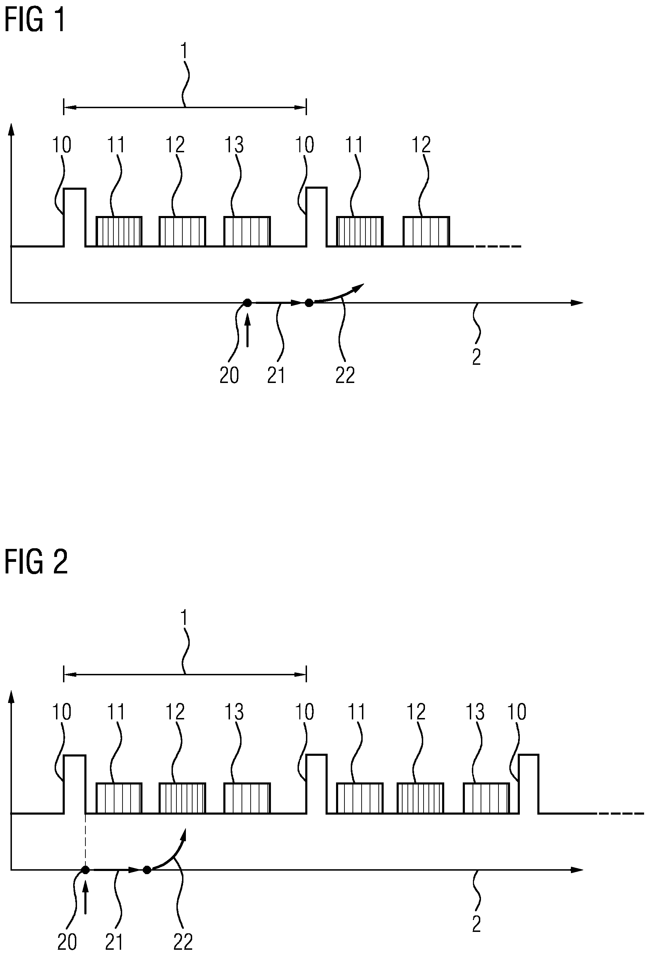

Es wird auf Fig. 1 Bezug genommen, die zunächst die Probleme aufzeigen soll, die sich bei einem herkömmlichen Verfahren ergeben. Über die Zeitachse 2 ist der zeitliche Ablauf gemäß eines PSI5-Datenübertragungsprotokolls, nachfolgend auch Protokoll genannt, dargestellt. Eine Datenübertragungsperiode, hier als Datenrahmen 1 bezeichnet, beginnt mit einem Synchronisationspuls 10, der von einer Steuervorrichtung an den Sensor, bzw. auch an weitere Sensoren gesendet wird. Der Synchronisationspuls 10 stellt eine Zeitbasis für alle mit der PSI5-Schnittstelle elektrisch verbundenen Geräte bzw. Sensoren bereit und ist hier vereinfacht als Rechteck dargestellt. In der Praxis handelt es sich um eine kontinuierlich ansteigende Spannung, die bis zu einem bestimmten Wert ansteigt, dort verharrt und wieder auf den Ausgangswert abnimmt, wobei die genaue Zeitdauer dieser jeweils einige µs andauernden Abschnitte durch das Protokoll festgelegt sind. Gemäß des PSIS-Datenübertragungsprotokolls ist auch eine asynchrone Datenübertragung möglich, bei der keine Synchronisationspulse 10 benötigt werden, dies ist jedoch nicht relevant für die vorliegende Erfindung.

Auf den Synchronisationspuls 10 folgen in zeitlich durch das Protokoll festgelegten Abständen vom Synchronisationspuls 10 Zeiträume, in denen die elektrisch mit der Steuervorrichtung verbundenen Geräte bzw. Sensoren ihre Daten, beispielsweise strommoduliert als auch mit dem Manchesterverfahren kodiert, senden können. Im vorliegenden Beispiel sind drei solche Zeitschlitze 11, 12, 13 verfügbar. Der Datenrahmen 1, von einem Synchronisationspuls 10 bis zum nächsten, nimmt bei diesem Ausführungsbeispiel einen Zeitraum von 500µs ein. Bei den Daten kann es sich um Sensorinformationen handeln, die in der Steuervorrichtung dekodiert und weiterverwertet werden.

Weiterhin ist in der Fig. 1 ein exemplarischer Abtastzeitpunkt 20 eines Sensors dargestellt, also der Zeitpunkt zu dem der Sensor einen Abtastwert einer Messgröße aufnimmt. Dieser Zeitpunkt ist in dem dargestellten herkömmlichen Verfahren unabhängig vom Protokoll, das die Kommunikation des Sensors mit der Steuervorrichtung, nicht aber die Messung des Sensors regelt. Insbesondere ist der Abtastzeitpunkt 20 unabhängig vom Synchronisationspuls 10.

Der Sensor wandelt den Abtastwert der Messgröße, beispielsweise einen Spannungswert, der mit einer Magnetfeldrichtung korrespondiert, die wiederum mit einem Messweg korrespondiert, in eine für die Steuervorrichtung lesbare Sensorinformation um. Diese Berechnungszeit 21 endet zu einem Zeitpunkt, an dem zunächst keiner der Zeitschlitze 11, 12, 13 zur Verfügung steht. Damit verzögert sich eine Übertragung 22 bzw. Ausgabe der Sensorinformation an den Datenbus bis zum nächsten Datenrahmen 1, der mit dem nächsten Synchronisationspuls 10 eingeleitet wird. Die Übertragung 22 erfolgt dann mit dem ersten Zeitschlitz 11, des nächsten Datenrahmens 1.

Der in Fig. 2 dargestellte Ablauf bezüglich des PSI5-Datenübertragungsprotokolls ist analog zu dem in Zusammenhang mit Fig. 1 beschriebenen Ablauf zu verstehen. Der Abtastzeitpunkt 20 des Sensors erfolgt jedoch nicht willkürlich, sondern zeitlich abgestimmt mit der fallenden Flanke des Synchronisationspulses 10. Alternativ könnte der Abtastzeitpunkt 20 beispielsweise gleichzeitig mit der steigenden Flanke oder zwischen den Flanken oder zu einem noch genauer definierten Zeitpunkt stattfinden. Ebenso kann der Abtastzeitpunkt 20 vor- oder nachversetzt zum Synchronisationspuls 10 erfolgen, solange er relativ zu diesem definiert ist und der Sensor dazu ausgebildet ist, den Abtastvorgang bzw. die Messung gemäß dieser Definition durchzuführen.

Die sensorinterne Wandlung des Abtastwerts der Messgröße in eine Sensorinformation mit der Berechnungszeit 21 erfolgt wiederum direkt im Anschluss an den Abtastzeitpunkt 20 und ist noch vor dem zweiten Zeitschlitz 12 abgeschlossen. Die Übertragung 22 der Sensorinformation kann damit im zweiten Zeitschlitz 12 erfolgen. Selbst wenn die Berechnungszeit 21 sich mit dem zweiten Zeitschlitz 12 überschneidet, kann eine Übertragung 22 in den dritten Zeitschlitz 13 und damit noch innerhalb des gleichen Datenrahmens 1 erfolgen.

## Patentansprüche

1. Verfahren zum Übertragen von Sensorinformation zwischen einem Sensor und einer zum Verarbeiten der Sensorinformation ausgebildeten Steuervorrichtung in einem Fahrzeug, wobei die Steuervorrichtung in Form eines Synchronisationspulses (10) eine Anforderung zum Übertragen von Sensorinformation an den Sensor aussendet, wobei der Sensor ausgelöst durch den Synchronisationspuls (10), zu einem relativ zum Synchronisationspuls (10) zeitlich definierten Zeitpunkt, insbesondere im Wesentlichen zeitgleich oder unmittelbar auf den Synchronisationspuls (10) folgend, einen Abtastwert einer Messgröße aufnimmt, wonach der Abtastwert in eine Sensorinformation gewandelt und der Steuervorrichtung in einem durch ein Datenübertragungsprotokoll definierten Zeitschlitz (11, 12, 13) übertragen wird, wobei das Datenübertragungsprotokoll ein Format zum zeitlichen Ablauf beim Übertragen von Sensorinformationen definiert, wobei sich ein Datenrahmen (1) gemäß des Datenübertragungsprotokolls periodisch wiederholt und einen Synchronisationspuls (10) der Steuervorrichtung sowie wenigstens zwei, vorzugsweise drei, nachfolgende Zeitschlitze (11, 12, 13) umfasst, **dadurch gekennzeichnet, dass** eine Überprüfung vorgenommen wird, ob der Zeitraum, den der Sensor minimal oder im Mittel benötigt, um den Abtastwert in eine Sensorinformation zu wandeln, größer ist als der Zeitraum eines Datenrahmens (1) ohne den letzten Zeitschlitz (13), und wenn dies der Fall ist, der Sensor den Abtastwert um diese zeitliche Differenz versetzt vor dem Synchronisationspuls (10) aufnimmt.

2. Verfahren nach Anspruch 1, **dadurch gekennzeichnet, dass** es sich um ein PSI5-Datenübertragungsprotokoll handelt und / oder ein Datenrahmen (1) eine Zeitspanne von wenigstens 500µs umfasst.

3. Verfahren nach einem der Ansprüche 1 oder 2, **dadurch gekennzeichnet, dass** die Sensorinformation der Steuervorrichtung in einem Zeitschlitz (11, 12, 13) übertragen wird, der innerhalb des Datenrahmens (1) liegt, der den von der Steuervorrichtung ausgesendeten Synchronisationspuls (10) umfasst.

4. Verfahren nach einem der Ansprüche 1 bis 3, **dadurch gekennzeichnet, dass** dem Sensor einer der Zeitschlitze (11, 12, 13) zugewiesen ist, so dass der zugewiesene Zeitschlitz (11, 12, 13) innerhalb des Datenrahmens (1) auf den Zeitraum folgt, den der Sensor minimal oder im Mittel benötigt, um den Abtastwert in eine Sensorinformation zu wandeln.

5. Verfahren nach Anspruch 4, **dadurch gekennzeichnet, dass** der zugewiesene Zeitschlitz (11, 12, 13) der vorletzte oder einer der vorangehenden Zeitschlitze (11, 12) des Datenrahmens (1) ist, wobei die Sensorinformation der Steuervorrichtung in dem zugewiesenen Zeitschlitz (11, 12) übertragen wird oder, falls sich der vom Sensor benötigte Zeitraum zum Wandeln des Abtastwerts in eine Sensorinformation mit dem zugewiesenen Zeitschlitz (11, 12) überschneidet, in einem der nachfolgenden Zeitschlitze (13) übertragen wird.

6. Verfahren nach einem der vorhergehenden Ansprüche, **dadurch gekennzeichnet, dass** der Synchronisationspuls (10) als Spannungsimpuls mit einer aufsteigenden und einer absteigenden Flanke ausgebildet ist, wobei der Sensor den Abtastwert der Messgröße während der aufsteigenden oder absteigenden Flanke aufnimmt.

7. Verfahren nach einem der vorhergehenden Ansprüche, **dadurch gekennzeichnet, dass** alle oder einzelne Verfahrensschritte zyklisch mehrfach wiederholt werden.

8. Sensor, ausgebildet zum Übertragen von Sensorinformation an eine zum Verarbeiten der Sensorinformation ausgebildete Steuervorrichtung in einem Fahrzeug mittels einem Verfahren nach einem der vorhergehenden Ansprüche.

9. Sensor nach Anspruch 8, ausgebildet als Höhenstandssensor zum Messen des Abstands zwischen einer Radaufhängung und der Karosserie eines Fahrzeugs, insbesondere zur Leuchtweiten- und / oder Fahrwerksregulierung.

10. Sensor nach Anspruch 8, ausgebildet als Beschleunigungsssensor zum Messen der Beschleunigung einer Radaufhängung relativ zur Karosserie eines Fahrzeugs, insbesondere zur Fahrwerksregulierung.

11. Sensor nach Anspruch 8, ausgebildet als Kombination des Beschleunigungssensors nach Anspruch 9 und des Höhenstandssensors nach Anspruch 10, insbesondere mit einem gemeinsamen Gehäuse.

## Claims

1. Method for transmitting sensor information between a sensor and a control device designed to process the sensor information in a vehicle, wherein the control device sends out a request to transmit sensor information to the sensor in the form of a synchronization pulse (10), wherein the sensor, in a manner triggered by the synchronization pulse (10), records a sampled value of a measured variable at a time defined relative to the synchronization pulse (10) in terms of time, in particular substantially simultaneously or immediately following the synchronization pulse (10), following which the sampled value is converted into sensor information and transmitted to the control device in a time slot (11, 12, 13) defined by a data transmission protocol, wherein the data transmission protocol defines a format for the time sequence when transmitting sensor information, wherein a data frame (1) is repeated periodically in accordance with the data transmission protocol and comprises a synchronization pulse (10) of the control device and at least two, preferably three, subsequent time slots (11, 12, 13), **characterized in that** a check is carried out to determine whether the minimum or average time interval that the sensor requires to convert the sampled value into sensor information is greater than the time interval of a data frame (1) without the last time slot (13), and if this is the case, the sensor records the sampled value before the synchronization pulse (10) in a manner offset by this time difference.

2. Method according to Claim 1, **characterized in that** a PSI5 data transmission protocol is involved and/or a data frame (1) comprises a timespan of at least 500 µs.

3. Method according to either of Claims 1 and 2, **characterized in that** the sensor information is transmitted to the control device in a time slot (11, 12, 13) that lies within the data frame (1) that comprises the synchronization pulse (10) sent out by the control device.

4. Method according to one of Claims 1 to 3, **characterized in that** the sensor is assigned one of the time slots (11, 12, 13), such that the assigned time slot (11, 12, 13) within the data frame (1) follows the minimum or average time interval that the sensor requires to convert the sampled value into sensor information.

5. Method according to Claim 4, **characterized in that** the assigned time slot (11, 12, 13) is the penultimate or one of the preceding time slots (11, 12) of the data frame (1), wherein the sensor information is transmitted to the control device in the assigned time slot (11, 12) or, if the time interval required by the sensor to convert the sampled value into sensor information overlaps the assigned time slot (11, 12), is transmitted in one of the following time slots (13).

6. Method according to one of the preceding claims, **characterized in that** the synchronization pulse (10) is in the form of a voltage pulse with a rising and a falling edge, wherein the sensor records the sampled value of the measured variable during the rising or falling edge.

7. Method according to one of the preceding claims, **characterized in that** all or some method steps are repeated cyclically multiple times.

8. Sensor, designed to transmit sensor information to a control device designed to process the sensor information in a vehicle using a method according to one of the preceding claims.

9. Sensor according to Claim 8, designed as a height sensor for measuring the distance between a wheel suspension system and the body of a vehicle, in particular for headlight range adjustment and/or chassis adjustment.

10. Sensor according to Claim 8, designed as an acceleration sensor for measuring the acceleration of a wheel suspension system relative to the body of a vehicle, in particular for chassis adjustment.

11. Sensor according to Claim 8, designed as a combination of the acceleration sensor according to Claim 9 and the height sensor according to Claim 10, in particular having a common housing.

## Revendications

1. Procédé de transmission d'informations de capteur entre un capteur et un dispositif de commande configuré pour le traitement des informations de capteur dans un véhicule, le dispositif de commande envoyant au capteur, sous la forme d'une impulsion de synchronisation (10), une demande de transmission d'informations de capteur, le capteur, déclenché par l'impulsion de synchronisation (10), à un instant défini temporellement par rapport à l'impulsion de synchronisation (10), en particulier sensiblement simultanément avec ou immédiatement à la suite de l'impulsion de synchronisation (10), enregistrant une valeur d'échantillonnage d'une grandeur mesurée, après quoi la valeur d'échantillonnage étant convertie en une information de capteur et transmise au dispositif de commande dans un créneau temporel (11, 12, 13) défini par un protocole de transmission de données, le protocole de transmission de données définissant un format pour un déroulement dans le temps lors de la transmission des informations de capteur, une trame de données (1) se répétant périodiquement conformément au protocole de transmission de données et comportant une impulsion de synchronisation (10) du dispositif de commande ainsi qu'au moins deux, de préférence trois, créneaux temporels (11, 12, 13) qui suivent, **caractérisé en ce qu'**un contrôle est effectué afin de vérifier si la durée requise au minimum ou en moyenne par le capteur pour convertir la valeur d'échantillonnage en une information de capteur est supérieure à la durée d'une trame de données (1) sans le dernier créneau temporel (13), et lorsque ceci est le cas, le capteur enregistre la valeur d'échantillonnage décalée ce cette différence temporelle avant l'impulsion de synchronisation (10).

2. Procédé selon la revendication 1, **caractérisé en ce qu'**il s'agit d'un protocole de transmission de données PSI5 et/ou une trame de données (1) comprend une période d'au moins 500 µs.

3. Procédé selon l'une des revendications 1 ou 2, **caractérisé en ce que** les informations de capteur du dispositif de commande sont transmises dans un créneau temporel (11, 12, 13) qui se trouve à l'intérieur de la trame de données (1), lequel comprend l'impulsion de synchronisation (10) émise par le dispositif de commande.

4. Procédé selon l'une des revendications 1 à 3, **caractérisé en ce que** l'un des créneaux temporels (11, 12, 13) est attribué au capteur, de sorte que le créneau temporel (11, 12, 13) attribué suit, à l'intérieur de la trame de données (1), la durée qui est requise au minimum ou en moyenne par le capteur pour convertir la valeur d'échantillonnage en une information de capteur.

5. Procédé selon la revendication 4, **caractérisé en ce que** le créneau temporel (11, 12, 13) attribué est l'avant-dernier ou l'un des créneaux temporels (11, 12) précédents de la trame de données (1), les informations de capteur du dispositif de commande étant transmises dans le créneau temporel (11, 12) attribué ou, dans le cas où la durée requise par le capteur pour convertir la valeur d'échantillonnage en une information de capteur chevauche le créneau temporel (11, 12) attribué, étant transmises dans l'un des créneaux temporels (13) suivants.

6. Procédé selon l'une des revendications précédentes, **caractérisé en ce que** l'impulsion de synchronisation (10) est réalisée sous la forme d'une impulsion de tension ayant un front montant et un front descendant, le capteur enregistrant la valeur d'échantillonnage de la grandeur mesurée pendant le front montant ou le front descendant.

7. Procédé selon l'une des revendications précédentes, **caractérisé en ce que** toutes les étapes du procédé ou certaines d'entre elles sont répétées plusieurs fois de manière cyclique.

8. Capteur, configuré pour transmettre des informations de capteur à un dispositif de commande configuré pour traiter les informations de capteur dans un véhicule au moyen d'un procédé selon l'une des revendications précédentes.

9. Capteur selon la revendication 8, réalisé sous la forme d'un capteur de hauteur destiné à mesurer la distance entre une suspension de roue et la carrosserie d'un véhicule, notamment pour la régulation de la portée des phares et/ou du châssis.

10. Capteur selon la revendication 8, réalisé sous la forme d'un capteur d'accélération destiné à mesurer l'accélération d'une suspension de roue par rapport à la carrosserie d'un véhicule, en particulier pour la régulation du châssis.

11. Capteur selon la revendication 8, réalisé sous la forme d'une combinaison du capteur d'accélération selon la revendication 9 et du capteur de hauteur selon la revendication 10, notamment avec un boîtier commun.
